# EUROPÄISCHE PATENTSCHRIFT

(11) **EP 1 488 471 B1**
(45) Veröffentlichungstag und Bekanntmachung des Hinweises auf die Patenterteilung: **03.01.2007**
(21) Anmeldenummer: 02747272.9
(22) Anmeldetag: 11.04.2002
(51) Int. Cl.: H01M 8/04

(54) **BRENNSTOFFZELLEN-LUFTVERSORGUNG**
FUEL CELL AIR SUPPLY
ALIMENTATION EN AIR POUR PILE A COMBUSTIBLE

(30) Priorität: 22.04.2001 DE 10120947
(43) Veröffentlichungstag der Anmeldung: 22.12.2004
(60) Teilanmeldung: 06014807.9
(73) Patentinhaber: DaimlerChrysler AG, 70567 Stuttgart (DE)
(72) Erfinder: FINGER, Helmut, 70711 Leinfelden-Echterdingen (DE); FLEDERSBACHER, Peter, 70619 Stuttgart (DE); KONRAD, Gerhard, 89081 Ulm (DE); LÖFFLER, Paul, 70199 Stuttgart (DE); STUTE, Manfred, 73730 Esslingen (DE); SUMSER, Siegfried, 70184 Stuttgart (DE)
(86) Internationale Anmeldenummer: PCT/EP2002/004023
(87) Internationale Veröffentlichungsnummer: WO 2002/086997

(56) Entgegenhaltungen:
- EP-A- 0 496 011
- EP-A- 1 009 053
- DE-A- 19 822 689
- PATENT ABSTRACTS OF JAPAN Bd. 012, Nr. 193 (E-617), 4. Juni 1988 (1988-06-04) & JP 62 296370 A (TOSHIBA CORP), 23. Dezember 1987 (1987-12-23)
- PATENT ABSTRACTS OF JAPAN Bd. 012, Nr. 193 (E-617), 4. Juni 1988 (1988-06-04) & JP 62 296371 A (TOSHIBA CORP), 23. Dezember 1987 (1987-12-23)

## Beschreibung

Die Erfindung betrifft eine Vorrichtung zur Luftversorgung von Brennstoffzellen nach der im Oberbegriff von Anspruch 1 näher definierten Art, sowie ein Verfahren zur Regelung einer solchen Vorrichtung.

Aus der gattungsgemäßen EP 0 496 011 A1 ist es für den Fall von Hochtemperatur-Brennstoffzellen bekannt, eine Vorrichtung zur Luftversorgung von Brennstoffzellen mit Kompressoren zu nutzen. Die Kompressoren sind dabei zweistufig ausgebildet, wobei einer als Niederdruckverdichter ausgebildet ist und ein weiterer in Reihe nachgeschalteter als Hochdruckverdichter. Der Hochdruckverdichter ist mit einer Turbine als Freiläufer fest gekoppelt. Die Turbine nutzt die heißen Abgase der Schmelzkarbonatbrennstoffzelle, indem sie mit der Austrittsverrohrung der Brennstoffzelle verbunden ist.

Aus dem Bereich der Kraftwerktechnik ist es gemäß der WO 97/31192 bekannt, dass Kompressoren der Strömungsmaschinenbauart zu Luftversorgung eingesetzt werden können. Dabei wir auch der Einsatz derartiger Luftversorgungsvorrichtungen in Brennstoffzellenkraftwerken nahe gelegt.

Gegenüber den herkömmlichen Brennstoffzellen-Luftversorgungssystemen, die mit relativ niedertourigen Verdrängerkompressoren ausgestattet sind, wird erfindungsgemäß eine zweistufige Verdichtung der Luft mittels reiner, sehr hochtouriger Strömungsverdichter vorgeschlagen. Hierbei bietet sich bei Auslegungsgesamtdruckverhältnissen von über 3 an, Strömungsmaschinen einzusetzen, die ein Zentrifugalfeld erzeugen, wie z. B. die Radialverdichter es können, um hohe spezifische Arbeiten pro Bauvolumen zu bewerkstelligen.

Will man die Brennstoffzelle für den Fahrzeugantrieb vorsehen, kommt schon aus Gründen der Platzknappheit den hohen spezifischen Leistungen, bezogen auf den Bauraum, eine dominierende Bedeutung zu.

Bedient man sich der Analogie der Verbrennungsmotoren hinsichtlich der zeitlichen Entwicklungstrends, so sieht man, daß die Saugmotoren von den aufgeladenen Motoren Stück für Stück vollständig abgelöst werden und man dürfte erwarten können, daß auch die einfacher darstellbaren Niederdruck-Brennstoffzellen des Fahrzeugantriebs im Laufe der zukünftigen Entwicklungsphasen durch Brennstoffzellen mit höheren Eintrittsdrücken eine Verdrängung erfahren, um die gewünschten hohen Leistungen in den knappen Bauvoluminas unterzubringen.

Gegenüber den Verdrängerverdichtern mit den hohen Druckpulsationen besteht bei den Strömungsverdichtem aufgrund der sehr großen Drehzahlunterschieden zu hohen Werten hin nicht nur Bauraumvorteile, sondern durch die kontunierliche Durchströmung der Strömungsmaschinen ergeben sich auch sehr gute Bedingungen für einen geräuscharmen und besonders wirkungsgradgünstigen Betrieb.

Da dem Wasserstoffverbrauch der Brennstoffzelle für die effiziente Bewertung der Fahrleistung die gleiche Bedeutung zukommt als dem Kraftstoffverbrauch beim Verbrennungsmotor, wird der Optimierung des Brennstoffzellen-Luftversorgungssystems genau so eine große Bedeutung beigemessen, wie der Optimierung der Ladungswechseleffizienz des Kolbenmotor., Am Gesamtsystemwirkungsgrad der Brennstoffzelle kann das Luftversorgungssystem gut bis zu einem Drittel der Gewichtung ausmachen kann.

Wie aus der europäischen Patentanmeldung EP 1 009 053 Al ersichtlich, wird dort ebenfalls eine zweistufige Aufladung der Brennstoffzelle vorgesehen, doch wird hier auf einen nachteiligen Verdrängerlader abgehoben, der durch einen Elektromotor angetrieben wird. Die Wirkung bezüglich Geräusch und Wirkungsgraddefizit wird offensichtlich nicht berücksichtigt.

Des weiteren wird in dieser Anmeldung die systemwirkungsgradgünstige Zwischenkühlung nicht erwähnt, obwohl dadurch Größenordnungen von bis 20% Wirkungsgradgewinn des Luftversorgungssystems leicht möglich werden.

Der Hinweis zur Abblasung über ein sogenanntes Überdruckventil nach der Hochdruckstufe gibt Anlass, den formulierten Stand der Technik als eine grobe Vorstufe zu deuten. Die positive Wirkung einer regelbaren wirkungsgradbeeinflussenden Umblasung und die entscheidende Bedeutung dieses regelbaren Elementes für den stabilen Betrieb der Brennstoffzelle, in dem es die Gefahr des Verdichterpumpens bei abgesenkten Durchsätzen verhindert, ist wohl nicht erkannt worden.

Die Aufgabe der Erfindung ist es ein platzsparendes, geräuscharmes und wirkungsgradgünstiges und in großen Durchsatzspannen stabil betreibbares Brennstoffzellen-Luftversorgungssystem zu erstellen.

Diese Aufgabe wird durch die Verwirklichung der Vorrichtung nach Anspruch 1 gelöst. Eine vorteilhafte Regelung ergibt sich aus Anspruch 9.

Dabei wird die Grundschaltung der beiden Strömungsverdichter als Reihenschaltung eines Niederdruckverdichters mit Elektroantrieb und eines Hochdruckverdichters mit einem Turbinenantrieb über eine Umblasevorrichtung erweitert, die eine stabile Betriebsweise der Strömungsverdichter bzw. des gesamten Luftversorgungssystems mit Brennstoffzelle garantieren kann.

Die Festlegung des Elektroantriebs bei der Niederdruckstufe, mit dem größenordnungsmäßig 2/3 der Gesamtleistung der beiden Verdichter-Stufen eingespeist wird, begründet sich aus der günstigeren Ausführung des Niederdruckverdichters mit größerem Raddurchmesser und damit den geringeren Drehzahlanforderungen an den Elektromotor. Mit einher gehen dabei die Radkanäle des Niederdruckverdichters, die unter diesen Randbedingungen unter Wirkungsgradgesichtspunkten besser gestaltbar sind als in der Hochdruckstufe, wobei der niedere Eintrittsdruck des Verdichters vorteilhaft mit wirkt und bei den hier erzeugbaren Radbeschauflungen bessere Eigenschaften bzgl. der Pumpstabilität im niederen Massenstrombereich bietet, bzw. eine größere Verdichterkennfeldbreite ermöglicht. Dies wäre nicht der Fall, wenn die Energieeinspeisung über den Elektromotor in der Hochdruckstufe unter Voraussetzung der gleichen oberen Elektromotorendrehzahl erfolgen würde.

Der Räder des Freiläufers werden schon aus Wirkungsgradgründen mit geringern Durchmessern versehen (günstiger Kanalverlauf, geringere Spaltverluste) und sind im allgemeinen bezüglich der maximalen Drehzahlen praktisch nicht eingeschränkt, da funktionsfähige Lagerungen von Turboladern der interessanten Größe Drehzahlen bis 300 000 1/min schon heute serienmäßig abdecken.

Prinzipiell wird der Betriebsbereich eines Strömungsverdichters durch die Pumpgrenze zu den niederen Massendurchsätzen und durch die Stopfgrenze zu den hohen Massendurchsätzen begrenzt.

Kritisch für die Massenstromspanne der Brennstoffzelle bzgl. dem Strömungsverdichter ist der Bereich der niederen Durchsätze, die im allgemeinen zu der erwähnten Pumpproblematik führen. Aus diesem Grunde wurde die Brennstoffzelle mit einer Bypass-Leitung parallel zur Brennstoffzelle mit einem regelbaren Ventil versehen. Hierdurch kann der Verdichtermassenstrom auch bei niedersten Brennstoffzellendurchsätzen um den Umblasemassenstrom, der durch die Ventilöffnung und dem Druckverhältnis über das Ventil bestimmt ist, erhöht werden und auch bei relativ hohen Druckverhältnissen in den stabilen Betriebskennfeldbereichen der beiden Verdichter gehalten werden.

Der Anspruch 2 trägt den starken Verbesserungsmöglichkeiten des Systemwirkungsgrades auf einfachste Art durch eine Zwischenkühlung der beiden Verdichterstufen Rechnung. Größenordnungen von bis zu 20% sind bei hohen Massendurchsätzen, bzw. Drücken nach der ersten Stufe leicht erreichbar. Im Vergleich zu den hohen Entwicklungsaufwendungen zur Verbesserung der Komponentenwirkungsgrade in den Maschinen, ist diese Maßnahme extrem kostengünstig, muß jedoch über einem gewissen notwendigen Bauraum bezahlt werden, wenn die Druckverluste nur unwesentlich zu Buche schlagen sollen.

Im Anspruch 3 wird auf variable Strömungsquerschnitte um und in der Turbine eingegangen, die über ein Verstellelement von der Regelung geführt werden können.

Wenn wir variable Strömungsquerschnitte uni die Turbine ansprechen, so könnten dies Klappen oder Schieber sein, die vor oder auch nach der Turbine platziert sind und im Wesentlichen eine Aufstaufunktion beinhalten. Nachteil ist jedoch die wirkungsgradschädliche Drosselwirkung der an die Aufstaudrücke angepassten Querschnitte. Ausgeschlossen werden sollte auch nicht der Einsatz von Abblaseventilen bei der hier durchgeführten Klassifizierung der betrachteten Varioelemente um und in der Turbine, die sich ebenfalls über einen Aktuator an die elektronische Regelung anschließen lassen.

Wirklich vorteilhaft wirksam hinsichtlich einer Effizienz und damit bzgl. Energierückgewinn sind jedoch erst die variablen Strömungsquerschnitte innerhalb der Turbine und zwar am besten die im allgemeinen direkt vor dem Turbinenrad angeordneten Vorleitgitter. Deren engste Kanal-Querschnitte werden durch dreh- oder translatorische Bewegungen der Leitschaufeln verändert Hierdurch wird nicht nur die engste Durchströmfläche verändert, sondern auch die Zuströmrichtung zum Turbinenrad, wodurch der Wirkungsgrad der Turbine, bzw. der Energierückgewinn und damit auch der Wirkungsgrad des Gesamtsystems merklich beeinflußt werden kann. Der variablen Turbine kommt im Rahmen der Verfahrensansprüche eine sehr große Bedeutung zu, da damit die gewünschten Prozesseintrittsdrücke der Brennstoffzelle im Verbindung mit den Verdichterstufen genau und wirkungsgradgünstig einregelbar sind.

Da das Austrittsprodukt der Brennstoffzelle Wasserdampf und Luft darstellt, macht es aus energetischer Sicht Sinn den Kondensator nach der Turbine zu plazieren, wie aus dem Anspruch 5 zu entnehmen ist. Die Trennung von Luft und Wasser wird durchgeführt, wobei eine Weiterverwertung des Wassers sich anbietet.

Die Nutzung des Wassers ist für Kühlzwecke von Komponenten, z. B. den Elektromotoren, genauso denkbar wie für die Scheibenwaschanlage. Bei Sonderanwendungen, z. B. bei Fahrzeuge für den Wüsteneinsatz, ließe sich das Wasser auch einer Trinkwasser-Aufbereitungsvorrichtung zuführen. Bei Camping-Fahrzeugen wäre das konditionierte, bzw. unkonditionierte Wasser zum Kochen oder auch für Wasch-, bzw. Toilettenzwecke nutzbar. Unabhängig von der Nutzung des erzeugten Wassers ließe sich das gesamte oder zumindest ein Teil davon in einem Tank abspeichern, bevor über die Weiterverwendung entschieden wird.

Um innerhalb des Kondensators einen vorteilhaften Unterdruck zur Entwässerung zu bewirken, könnte am Kondensatoraustritt der Luftseite in Verbindung mit der Wasserseite ein entsprechender Diffusor Nutzen bringen. Der Erosionsgefahr am Turbinenrad durch Wasserschlag, im besonderen im Radeintrittsbereich, kann durch verschleißfeste Werkstoffe der Räder oder Oberflächenbeschichtungen entgegnet werden. Da die Temperaturschwankungen in der Turbine nicht sonderlich hoch sind, ist der Einsatz von Keramiken als Radwerkstoff oder Beschichtungsmaterial in diesem Zusammenhang von der Rissanfälligkeit der Keramiken völlig unkritisch.

Ein Grundproblem der zugeführten Luft zur Brennstoffzelle ist deren Reinhaltung von den benachbarten Lagerschmierstoffbereichen der Kompressoren. Die Ansprüche 5 und 6 weisen auf eine Entkopplung der Brennstoffzellenluft vom Schmierstoffbereich der Lagerungen hin, in dem ein Puffervolumen oder Trennraum dazwischen angeordnet wird, der zumindest unter Umgebungsdruck oder sogar unter einem Überdruck steht und somit eine Sperrwirkung für den Schmierstoffeintrag erbringen kann. Um den Öleintrag letztlich auszuschließen ergibt eine Druckbeaufschlagung des Puffervolumens ein Sperrluftstrom durch die berührungsfreien Lagerabdichtungen entgegen der möglichen Schmierstoffaustrittsrichtung in das Lagergehäuse hinein.

Das Problem des Schmierstoff-Eintrags in die Brennstoffzellen-Luft besteht bei ölfreien Lagerungen nach Anspruch 7 nicht mehr. Die Entwicklungen von Luft- und noch mehr bei Magnetlagerungen bedeuten jedoch noch einen sehr hohen Entwicklungsaufwand, deren Anstregungen erst bei zukünftigen Brennstoffzellen-Luftversorgungssystemen Früchte tragen werden.

Dem Verfahrensanspruch 8 kommt eine besondere Bedeutung für den stabilen Betrieb der Brennstoffzelle von der Luftversorgungsseite zu. Ein charkteristisches Merkmal der Strömungsverdichter ist die zu kleinen Durchsätzen auftretende schon erwähnte Instabilitätsgrenze. Um die geforderten Durchsatzspannen der Brennstoffzelle zu garantieren wird die Umblaseeinrichtung des Bypasses ab einem gewissen unteren Durchsatzwert aktiviert und stufenlos im engsten Querschnitt des Ventils an den Luftbedarf der Brennstoffzelle über die Regelung angepasst. Somit kann der Durchsatzpunkt, bzw. Verdichteraustrittsdruck im Verdichterkennfeld nahe der Pumpgrenze mit bestimmten Toleranzen im Zusammenspiel mit der Dosierung der elektrischen Energiezufuhr zum Niederdruckverdichter-Antrieb gehalten werden, obwohl der Durchsatz der Brennstoffzelle entsprechend dem Bedarf weiter abnimmt. Je näher an die Pumpgrenze herangefahren wird, um so geringer wird die notwendige Umblasemenge, bzw. die Wirkungsgradrücknahme zur Garantierung der stabilen Betriebsweise sein. In einer Verfeinerung des Systems kann es Sinn machen die Verdichter mit einer Pumpsensorik zu versehen, die mit der Regelung verkoppelt ist, wodurch auch die Verbrauchsoptimierung der Zelle weiter erleichtert wird.

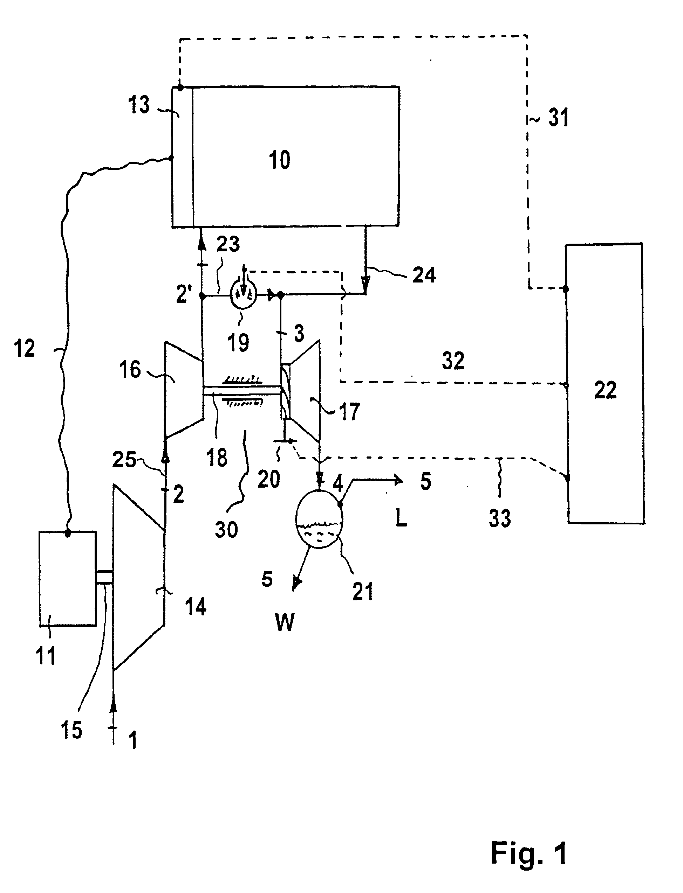

Ein Großteil der Merkmale des Brennstoffzellen-Luftversorgungssystems lässt sich aus der Prinzipschaltungsskizze Fig. 1 entnehmen.

Aus der Umgebung wird gefilterte Luft durch den Niederdruckverdichter (14) mit dem Zustand 1 angesaugt. Das Verdichterrad des Niederdruckverdichters (14) steht über eine Antriebswelle (15) mit dem Elektromotor (11) in Verbindung, der das wesentliche Aggregat darstellt, um Energie über den Niederdruckverdichter in die Luftströmung und damit in das gesamte System der Brennstoffzellen-Luftversorgung einzuspeisen. Die Energiezuführung erfolgt entweder direkt aus der Brennstoffzelle (10) oder aus dem Stromspeicher (13) über die Kabel (12). Der totale Zustandspunkt 2 nach dem Niederdruckverdichter ist praktisch durch diese Einspeise-Energiemenge des Elektromotors geprägt.

Ein Element, das in der Übersichtsskizze nicht eingezeichnet ist, ist ein Zwischenkühler, der auf jeden Fall eingesetzt wird, wenn der Wasserstoffverbrauch hinsichtlich niederer Verbräuche optimiert werden soll. Zum andern kann es eine Notwendigkeit sein, daß die Eintrittstemperatur der Zelle unterhalb eines Wertes bleiben muß, um die mechanische Haltbarkeit der Membran nicht zu gefährden. Die Zwischenkühlung führt zu einer Begünstigung einer reduzierten Leistungsaufnahme des Hochdruckverdichters (16), da die Leistungsaufnahme direkt proportional zu dessen Eintrittstemperatur ist.

Nach der Turbine (17) erfährt das Gemisch Luft-Wasserdampf-Wasser den temperaturreduzierten Zustandspunkt 4 vor dem Kondensator (21).

Im Kondensator (21) erfolgt die Trennung der Wasseranteile von der Luft, die dann über eigene Austrittsöffnungen des Kondensators 5L und 5W in das nachfolgende Austrittsrohrsystem der Luftversorgungseinrichtung wegströmen. Im Austrittsrohrsystem können sich Elemente befinden, die für einen Unterdruck' des Kondensators sorgen und für die Weiternutzung des Kondensats zuständig sind.

Der Kernintelligenz zur Nutzung des Brennstoffzellen-Luftsystem steckt im Regler (22), der die drei regelbaren Komponenten: Elektromotor mit den Signalen (31), das Umblaseventil (19) mit den Signalen 32 und ggf. die Varioelernente bzgl der Turbine (17) mit den Signalen (33) im Zusammenspiel optimal führen soll. Wie bei den Verbrennungsmotoren üblich, wird der Regler (22) auch bei der Brennstoffzelle dazu im Allgemeinen mit hinterlegten elektronischen Daten versehen, um bei den angefahrenen Betriebspunkten eine optimale Einstellung, bzw. Kombination der betreffenden Aktuatorpositionen zu bewirken.

### Nummernverzeichnis der Fig. 1

- 1: Strömungsverdichter mit Elektroantrieb, Eintrittsebene
- 2: Strömungsverdichter mit Elektroantrieb, Austrittsebene Eintrittsebene Zwischenkühler/ Eintrittsebene Strömungsverdichter des Freiläufers
- 2': Strömungsverdichter des Freiläufers, Austrittsebene Eintrittsebene Brennstoffzelle
- 3: Eintrittsebene Turbine (Starrturbine mit oder ohne Abblasevorrichtung oder Varioturbine)
- 4: Austrittsebene Turbine ggf.Eintrittsebene Kondensator
- 5L: Austrittsebene Kondensator Luft
- 5W: Austrittsebene Kondensator Wasser

- 10: Brennstoffzelle
- 11: Elektromotor
- 12: Elektroleitung zur Brennstoffzelle, Stromspeicher
- 13: Stromspeicher, Akku
- 14: Strömungsverdichter von Elektromotor angetrieben
- 15: Strömungsverdichter-Radrücken, Verbindungsteil zur Lagerung
- 16: Strömungsverdichter Freiläufer
- 17: Turbine Freiläufer (Starrturbine mit oder ohne Abblasevorrichtung oder Varioturbine)
- 18: Rotorlagerung (Kugellagerung, Gleitlagerung, Luftlagerung, Magnetlagerung)
- 19: Umblaseventil zwischen nach Hochdruckverdichter mit vor Turbineneintritt
- 20: Betätigung der Variovorrichtuna der Turbine
- 21: Kondensator
- 22: Regelung des Luftversorgungssystems
- 23: Verbindungsleitung nach Hochdruckverdichter zu vor Turbineneintritt
- 24: Austrittsverrohrung der Brennstoffzelle zur Turbine
- 25: Austrittsverrohrung des Niederdruckverdichters
- 30: Freiläufer: Strömungsverdichter mit Turbine über starre Welle verbunden
- 31: Signal für die Energiezuteilung aus Brennstoffzelle und/oder Stromspeicher des Elektromotors
- 32: Signal für Schliess-/Öffnungs-Position des Umblaseventil-Aktuators
- 33: Signal für den Aktuator des Vario-Elements der Turbine

## Patentansprüche

1. Vorrichtung zur Luftversorgung von Brennstoffzellen mit Kompressoren, wobei einer als Niederdruckverdichter ausgebildet ist und ein weiterer in Reihe nachgeschalteter Hochdruckverdichter (16) mit einer Turbine (17) als Freiläufer (30) fest gekoppelt ist, die mit der Austrittsverrohrung (24) der Brennstoffzelle (10) verbunden ist,
**dadurch gekennzeichnet,**
**daß** der Niederdruckverdichter als Strömungsverdichter (14) ausgebildet und niederdruckseitig mit einem Elektromotor (11) verbunden ist, wobei der in Reihe nachgeschaltete Hochdruckverdichter (16) von der Strömungsmaschinenbauart ist, und daß nach dem Hochdruckverdichter (16) vor der Brennstoffzelle (10) eine Verbindungsleitung (23) zur Austrittsverrohrung (24) der Brennstoffzelle (10) führt, in die ein regelbares Ventil (19) eingebracht ist.

2. Vorrichtung zur Luftversorgung von Brennstoffzellen nach Anspruch 1 **dadurch gekennzeichnet,**
**daß** nach dem Niederdruckverdichter (14) in der Austrittsverrohrung (25), die zum Hochdruckverdichter führt, ein Zwischenkühler plaziert wird.

3. Vorrichtung zur Luftversorgung von Brennstoffzellen nach Anspruch 1 **dadurch gekennzeichnet,**
**daß** im Bereich um die Turbine (17) des Freiläufers (30) oder innerhalb der Turbine (17) variable Elemente bzgl. der Strömungsquerschnitte vorliegen, die über die Betätigungseinrichtung (20) mit einer Regelung koppelbar sind.

4. Vorrichtung zur Luftversorgung von Brennstoffzellen nach Anspruch 1 **dadurch gekennzeichnet,**
**daß** nach der Turbine (17) ein Kondensator (21) angeordnet ist, der einen Ausgang für das Wasser (W) und einen Ausgang für die Luft (L) aufweist und daß an den Ausgängen (W, L) Vorrichtungen zur Unterdruckerzeugung anschließbar sind.

5. Vorrichtung zur Luftversorgung von Brennstoffzellen nach Anspruch 1
**dadurch gekennzeichnet,**
**daß** ein abgedichteter Trennraum zwischen dem Schmierstoffbereich der Lagerung des Niederdruckverdichters (14) und Elektromotors (11) zum Verdichterbereich der Luftstromförderung besteht, der zumindest unter Umgebungsdruck oder einem Überdruck für eine Sperrluftbeaufschlagung steht.

6. Vorrichtung zur Luftversorgung von Brennstoffzellen nach Anspruch 1
**dadurch gekennzeichnet,**
**daß** ein Trennraum zwischen dem Schmierstoffbereich der Lagerung (18) des Freiläufers (30) zum Verdichterbereich der Luftstromförderung des Hochdruckverdichters (16) besteht, der zumindest unter Umgebungsdruck oder einem Überdruck für eine Sperrluftbeaufschlagung steht.

7. Vorrichtung zur Luftversorgung von Brennstoffzellen nach Anspruch 1
**dadurch gekennzeichnet,**
**daß** von den Lagerungen des Niederdruck- oder Hochdruckverdichters zumindest die Lagerung (18) nach den Merkmalen einer Luft- oder Magnetlagerung ölfrei gestaltet ist.

8. Verfahren zur Regelung einer Vorrichtung nach den Ansprüchen 1 zur Brennstoffzellen-Luftversorgung
**dadurch gekennzeichnet,**
**daß** der bekannte Soll-Luftmassenstrom der Brennstoffzelle über die Energiezufuhr zum Elektromotor (11) mittels der Signale (31) in Verbindung mit der geregelten Einstellung der Schließ-/Öffnungspositionen des Umblaseventils (19), bzw. Bypass-Stroms der Brennstoffzelle, entsprechend der Signale (32) des Reglers (22) eingestellt wird und dabei von der Sensibilität des Regelungssystems her auch Betriebslinien, bzw. Betriebspunkte im Verdichterkennfeld sehr nahe der Instabilitätsgrenze (Pumpgrenze) erlauben.

## Claims

1. Apparatus for supplying air to fuel cells with compressors, wherein one is in the form of a low-pressure compressor and a further high-pressure compressor (16), which is connected downstream in series, is firmly coupled as a freewheeling device (30) to a turbine (17) and the turbine (17) is connected to the outlet pipe system (24) of the fuel cell (10)
**characterized**
**in that**, the low-pressure compressor is in the form of as a continuous-flow compressor (14) and is connected on the low-pressure side to an electric motor (11), with the high-pressure compressor (16), which is connected downstream in series, being in the form of a continuous-flow machine, and in that, after the high-pressure compressor (16) and before the fuel cell (10), with a connecting line (23) leading to the outlet pipe system (24) of the fuel cell (10), and a controllable valve (19) being introduced into this connecting line (23).

2. Apparatus for supplying air to fuel cells according to Claim 1,
**characterized**
**in that**, after the low-pressure compressor (14), an intercooler is placed in the output pipe system (25) which leads to the high-pressure compressor.

3. Apparatus for supplying air to fuel cells according to Claim 1,
**characterized**
**in that** elements which vary the flow cross sections are located in the area around the turbine (17) of the freewheeling device (30) or within the turbine (17), and can be coupled via the operating device (20) to a controller or control system.

4. Apparatus for supplying air to fuel cells according to Claim 1,
**characterized**
**in that** a condenser (21) is arranged downstream from the turbine (17) and has an output for the water (W) and an output for the air (L), and in that apparatuses for producing vacuum pressure can be connected to the outputs (W, L).

5. Apparatus for supplying air to fuel cells according to Claim 1,
**characterized**
**in that** there is a sealed separating area between the lubricant area for the bearing of the low-pressure compressor (14) and electric motor (11) and the compressor area of the air flow feed, and the separating area is subject at least to the environmental pressure or to an overpressure for the application of barrier air.

6. Apparatus for supplying air to fuel cells according to Claim 1,
**characterized**
**in that** there is a separating area between the lubricant area for the bearing (18) of the freewheeling device (30) and the compressor area of the air flow feed for the high-pressure compressor (16), and the separating area is subject at least to the environmental pressure or to an overpressure for the application of barrier air.

7. Apparatus for supplying air to fuel cells according to Claim 1,
**characterized**
**in that**, of the bearings of the low-pressure compressor or high-pressure compressor, at least the bearing (18) is designed to be oil-free in accordance with the features of an air bearing or magnetic bearing.

8. Method for controlling an apparatus according to Claim 1 for a fuel cell air supply,
**characterized**
**in that** the known nominal air mass flow of the fuel cell is adjusted in accordance with the signals (32) from the regulator (22) via the power supply to the electric motor (11) by means of the signals (31) in conjunction with the controlled adjustment of the closed/open positions of the circulation valve (19) or bypass flow of the fuel cell, and in this case also allow operating lines, or operating points in the compressor family of characteristics, very close to the instability limit (pumping limit) based on the sensitivity of the control system.

## Revendications

1. Dispositif d'alimentation en air de piles à combustible comprenant des compresseurs, l'un d'eux étant aménagé en compresseur basse pression et un autre compresseur haute pression (16) raccordé en série étant accouplé solidairement à une turbine (17) en tant que dispositif à roue libre (30), laquelle est raccordée à la tuyauterie de sortie (24) de la pile à combustible (10), **caractérisé en ce que** le compresseur basse pression est aménagé en turbocompresseur (14) et raccordé à un moteur électrique (11) par le côté basse pression, le compresseur haute pression(16) raccordé en aval en série étant du type turbomachine, et **en ce que**, en aval du compresseur haute pression (16), en amont de la pile à combustible(10), un conduit de liaison (23) conduit à la tuyauterie de sortie (24) de la pile à combustible (10), dans laquelle une vanne réglable (19) est installée.

2. Dispositif d'alimentation en air de piles à combustible selon la revendication 1, **caractérisé en ce que**, en aval du compresseur basse pression (14), dans la tuyauterie de sortie (25) qui conduit au compresseur haute pression, est installé un refroidisseur intermédiaire.

3. Dispositif d'alimentation en air de piles à combustible selon la revendication 1, **caractérisé en ce que** dans la zone du dispositif à roue libre (30) autour de la turbine (17) ou à l'intérieur de la turbine (17), il y a des éléments variables concernant les sections transversales d'écoulement, qui peuvent être couplés via le dispositif de commande (20) à une régulation.

4. Dispositif d'alimentation en air de piles à combustible selon la revendication 1 **caractérisé en ce que**, en aval de la turbine (17) est disposé un condenseur (21) qui présente une sortie pour l'eau (W) et une sortie pour l'air (L) et **en ce qu'**aux sorties (W,L) peuvent être raccordés des dispositifs producteurs de vide.

5. Dispositif d'alimentation en air de piles à combustible selon la revendication 1, **caractérisé en ce qu'**il existe une chambre de séparation étanche entre la zone de lubrification des paliers du compresseur basse pression (14) et du moteur électrique (11), et la zone de compression du refoulement du débit d'air, qui se trouve au moins à pression ambiante ou sous une surpression pour une admission d'air de barrage.

6. Dispositif d'alimentation en air de piles à combustible selon la revendication 1, **caractérisé en ce qu'**il existe une chambre de séparation étanche entre la zone de lubrification des paliers (18) du dispositif à roue libre (30), et la zone de compression du, refoulement du débit d'air du compresseur haute pression (16), qui se trouve au moins à pression ambiante ou sous une surpression pour une admission d'air de barrage.

7. Dispositif d'alimentation en air de piles à combustible selon la revendication 1, **caractérisé en ce que**, parmi les paliers des compresseurs basse ou haute pression, au moins le palier (18) est réalisé sans huile, suivant les caractéristiques d'un palier pneumatique ou magnétique.

8. Procédé pour la régulation d'un dispositif selon la revendication 1, destiné à l'alimentation en air de piles à combustible, **caractérisé en ce que** le débit massique d'air connu de consigne de la pile à combustible est réglé, via l'apport en énergie au moteur électrique (11) au moyen des signaux (31) en relation avec la mise au point réglée des positions fermée/ouverte de la vanne de dérivation(19), ou du débit de by-pass de la pile à combustible, conformément aux signaux (32) du régulateur (22) et autorise en l'occurrence, du point de vue de la sensibilité du système de régulation, aussi des courbes de fonctionnement, ou des points de fonctionnement très près de la limite d'instabilité (limites de pompage) dans le diagramme caractéristique du compresseur.
